Europäisches Patentamt

European Patent Office

Office européen des brevets

(11) Veröffentlichungsnummer: **0 002 689**
A1

(12) # EUROPÄISCHE PATENTANMELDUNG

(21) Anmeldenummer: **78101566.4**

(22) Anmeldetag: **05.12.78**

(51) Int. Cl.²: **F 28 F 9/26,** F 25 B 39/00, F 16 L 15/00

(30) Priorität: **19.12.77 DE 2756660**

(43) Veröffentlichungstag der Anmeldung: **11.07.79** Patentblatt 79/14

(84) Benannte Vertragsstaaten: **BE CH FR GB IT LU NL SE**

(71) Anmelder: **VAW LEICHTMETALL GMBH, Dellweg 1 Postbach 2448, D-5300 Bonn 1 (DE)**

(72) Erfinder: **Dick, Günter, Sperlingsweg 4, D-5205 St.Augustin 1 (DE)**

(74) Vertreter: **Müller-Wolff, Thomas, Dipl.-Ing., VEREINIGTE ALUMINIUM-WERKE AG Postfach 2468, D-5300 Bonn 1 (DE)**

(54) **Wärmetauscherrohr.**

(57) Wärmetauscherrohr mit Anschlußstück (3), wobei das Wärmetauscherrohr innen mit Rippen (2) versehen ist und das Anschlußrohr ein selbstschneidendes Gewinde (4) aufweist.

EP 0 002 689 A1

0002689

Wärmetauscherrohr

Die Erfindung betrifft Wärmetauscherrohre, wie z.B. Rohranschlüsse an Verdampfer bzw. Kondensatorrohren.

Bekannt sind Verdampferrohre aus Al-Strangpreßprofilen mit entsprechend angepreßten Rippen zur Oberflächenvergrößerung für einen besseren Wärmeübergang der Luft auf die im Rohrinneren verdampfende bzw. kondensierende Flüssigkeit. Derartige Rippenrohre sind in Wärmepumpenkreisläufen sowohl für Kühlung als auch für Heizung bereits im Einsatz. Bedingt durch in Profillängsrichtung angepreßte Kühlrippen ist ein Biegen der Rohre nicht möglich, ohne die Rippen vorher mechanisch zu entfernen. Außerdem ist das Anbringen eines weiterführenden Rohres am jeweiligen Profilende ohne kostspielige Schweißung nicht möglich.

Diese Arbeiten können nur im Rahmen einer Vorfertigung im Werk erfolgen. Die Rippenrohre müssen in diesem Fall nach Aufmaß auf entsprechende Fixlänge gesägt und mit den Rohranschlußstücken im Werk bereits montiert werden. Das eingangs beschriebene Verfahren ist daher umständlich und erfordert einen hohen Zeitaufwand.

weiterhin sind selbstschneidende Gewindeeinsätze bekannt, die durch Hineindrehen eines weiteren Gewinderohres in diesen Einsatz mit anderen weiterführenden Rohren verbunden werden können. Bei Verwendung dieser Gewindeeinsätze müssen

0002689

jedoch zwei Teile lagermäßig geführt werden, wobei der Querschnittssprung vom Rippenrohr-Innendurchmesser zum Rohrstutzeninnendurchmesser relativ groß wird.

Aufgabe der vorliegenden Erfindung ist es, ein einfach zu montierendes Wärmetauscherrohr zu schaffen, bei dem die beschriebenen Nachteile vermieden werden.

Zur Lösung dieser Aufgabe wird die in den Patentansprüchen genannte Anordnung vorgeschlagen.

Die Rippenrohre können auf der Baustelle von Hilfskräften mittels einfacher, bereits bewährter Werkzeuge, wie z.B. Innensechskantschlüssel, am jeweiligen Rohrende mit einem Rohrverlängerungsstück (Anschlußrohr) versehen werden, an denen später über bekannte Schneidring-Rohrverschraubungen die weiterführenden Rohrleitungen angeschlossen werden.

Zum leichten Gewindeschneiden sind die Verdampfer- bzw. Kondensatorrohre innen mit kleinen Rippen versehen, die gleichzeitig die Aufgabe haben, den Wärmeübergang vom Metall auf die leicht siedende Flüssigkeit bzw. Wärmeträgermedium durch vergrößerte Oberfläche zu verbessern.

Gemäß Patentanspruch 2 soll die Rippenhöhe im Innern des Wärmetauscherrohres 1 etwa gleich der Gewindetiefe des Anschlußrohres 3 sein. Für den Fachmann ist verständlich, daß die Rippenhöhe nicht größer als der Zwischenraum zwischen Kerndurchmesser des Anschlußrohres 3 und dem Innendurchmesser des Wärmetauscherrohres sein darf. Sonst würde sich das Anschlußrohr 3 nicht in das Wärmetauscherrohr 1 eindrehen lassen. Andererseits darf die Gewindetiefe des Anschlußrohres 3 nicht größer als die Rippenhöhe im Innern des Wärmetauschers 1 sein, da sonst sich entweder das Gewinde nicht in das Rippenprofil einschneiden läßt oder eine dichte

- 3 -

0002689

Verbindung nicht zu erzielen ist. Die Angabe, daß die Rippenhöhe des Wärmetauscherrohres "etwa gleich" der Gewindetiefe des Anschlußrohres ist, bedeutet daher, daß der Fachmann jedes beliebige Verhältnis innerhalb der oben genannten Grenzen wählen kann.

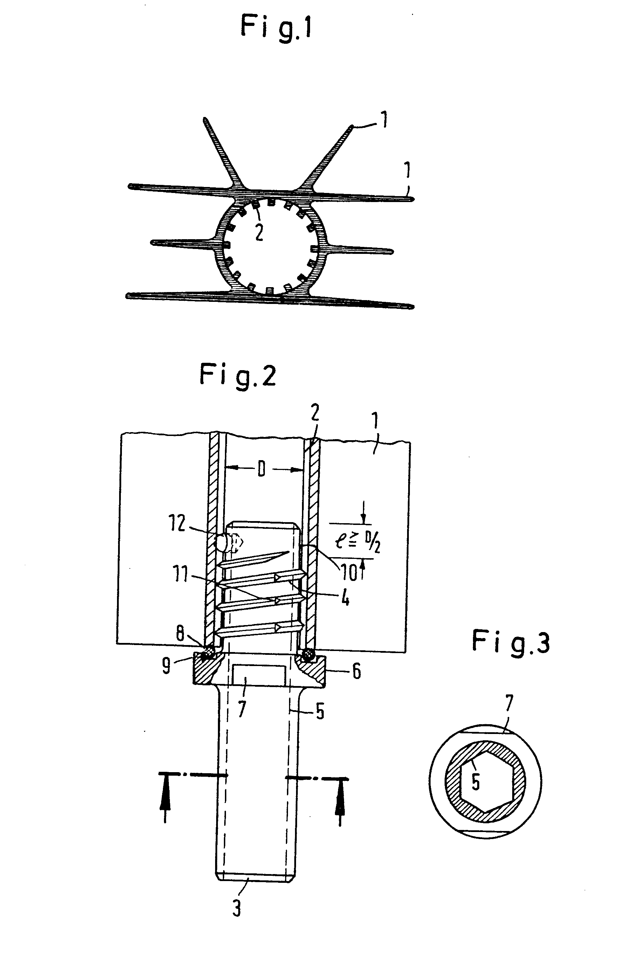

Figur 1 zeigt den Querschnitt eines Verdampfer- bzw. Kondensatorrohres. Mit 1 sind die außen angepreßten Kühlrippen bezeichnet, während mit 2 die innenliegenden Rippen gekennzeichnet sind. Letztere erfüllen zwei Aufgaben gleichzeitig, und zwar vergrößern sie die Wärmeübergangsfläche vom Metallrohr auf das Wärmetransportmedium, zum anderen dienen sie zum einfacheren Einschneiden der kopfseitigen Gewinde.

Figur 2 zeigt das Kopfende eines Rippenrohres im Längsschnitt. Mit 1 sind die außen angepreßten und mit 2 die im Rohrinneren angeordneten Rippen bezeichnet. Der mit 3 bezeichnete Rohrstutzen (Anschlußrohr) ist mit selbstschneidendem Gewinde 4 versehen. Wie dies Figur 3 als Schnittdarstellung zeigt, kann er innen durchgehend mit einer Sechskantbohrung ausgebildet sein. Hierdurch wird es möglich, mit bekannten Innensechskantschlüsseln das Gewinde direkt mit dem Rohrstutzen in die Rippenrohrenden von Hand einzuschneiden.

Zusätzlich hat der Rohrstutzen 3 am Dichtflansch 6 eine Anfräsung 7, damit ein Eindrehen mittels Schraubenschlüssel ebenfalls möglich ist.

Mit 8 ist eine elastische Gummidichtung, die sowohl als O-Ring als auch als Flachdichtung ausgebildet sein kann, bezeichnet.
Eine im Dichtflansch 6 angeordnete Nut 9 verhindert ein Verrutschen der Dichtung während des Anziehens.

Zwecks einfacherer zentrischer Eindrehung des Rohrstutzens 3 in das Rippenrohrende besitzt dieser kopfseitig ein Zentrier-

stück 10, dessen Länge l mindestens gleich, vorzugsweise größer ist als die Hälfte des Profilinnendurchmessers D.

Zur Vergrößerung der Gewindeschneidfläche und zur Verbesserung der Spanbrechung ist das Gewinde 4 mit am Umfang gleich verteilten scharfkantigen Gewindeunterbrechungen 11 versehen.

Es ist vorteilhaft, daß das Rohranschlußstück aus einer hohl stranggepreßten Rundstange einer Aluminium-Knetlegierung besteht, deren Festigkeitswerte über denen der zu verlängernden Rippenrohre liegt.

Die Erfindung wird dadurch weitergebildet, daß am Zentrierteil 10 eine oder zwei zerstörbare Kapseln 12 mit Ein- oder Zweikomponentenkleber gefüllt sind und die beim Gewindeeindrehen zerbrechen, sich vermischen und eine zusätzliche Sicherheitsklebung bewirken.

Patentansprüche

1. Wärmetauscherrohr mit Anschlußstück, dadurch gekennzeichnet, daß das Wärmetauscherrohr (1) innen mit Rippen (2) versehen ist und das Anschlußrohr (3) ein selbstschneidendes Gewinde (4) aufweist.

2. Vorrichtung nach Anspruch 1, dadurch gekennzeichnet, daß die Rippenhöhe im Inneren des Wärmetauscherrohres (1) etwa gleich der Gewindetiefe des Anschlußrohres (3) ist.

3. Vorrichtung nach einem der vorhergehenden Ansprüche, dadurch gekennzeichnet, daß die selbstschneidenden Gewindegänge mit scharfkantigen Quernuten (11) versehen sind.

4. Vorrichtung nach einem der vorhergehenden Ansprüche, dadurch gekennzeichnet, daß das Anschlußrohr (3) eine im wesentlichen durchgehende, absatzfreie Bohrung aufweist.

5. Vorrichtung nach einem der vorhergehenden Ansprüche, dadurch gekennzeichnet, daß das Anschlußrohr (3) am offenen Ende mit einer Sechskantbohrung (5) versehen ist.

6. Vorrichtung nach einem der vorhergehenden Ansprüche, dadurch gekennzeichnet, daß das Anschlußrohr (3) mit einem Dichtflansch (6) versehen ist, in dem eine eingedrehte Nut (9) zur Aufnahme einer Gummidichtung (8) angeordnet ist.

7. Vorrichtung nach einem der vorhergehenden Ansprüche, dadurch gekennzeichnet, daß der Dichtflansch (6) mit mindestens zwei gegenüberliegenden, parallelen Anfräsungen (7) im Abstand genormter Schlüsselweiten versehen ist.

0002689

8. Vorrichtung nach einem der vorhergehenden Ansprüche, dadurch gekennzeichnet, daß vor dem selbstschneidenden Gewinde (4) des Anschlußrohres (3) ein Zentrierteil (10) angeordnet ist, dessen Länge mindestens die Hälfte des Rohrinnendurchmessers beträgt.

9. Vorrichtung nach einem der vorhergehenden Ansprüche, dadurch gekennzeichnet, daß das Anschlußrohr (3) aus einer hohlstranggepreßten Rundstange einer Aluminium-knetlegierung besteht, deren Festigkeitswerte über denen der Rippenrohre liegt.

10. Vorrichtung nach einem der vorhergehenden Ansprüche, dadurch gekennzeichnet, daß am Zentrierteil (10) mindestens eine zerstörbare Kapsel (12) mit einem Komponentenklebstoff gefüllt ist.

0002689

Fig.1

Fig.2

Fig.3

Europäisches Patentamt

**EUROPÄISCHER RECHERCHENBERICHT**

0002689
Nummer der Anmeldung

EP 78 10 1566

| | EINSCHLÄGIGE DOKUMENTE | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| | <u>FR – A – 2 259 340</u> (IWET) <br> * Seite 10, Absatz 4; Figur 4 * <br><br> — | 1,4,6, 7 | F 28 F 9/26 <br> F 25 B 39/00 <br> F 16 L 15/00 |
| | <u>FR – A – 1 406 971</u> (CALUMET) <br> * Seite 1, rechte Spalte, Absatz 6; Figur 3 * <br><br> — | 1 | |
| | <u>GB – A – 748 030</u> (FRESH) <br> * Seite 3, linke Spalte, Absatz 1; Figur 1 * <br><br> — | 1 | RECHERCHIERTE SACHGEBIETE (Int.Cl.²) <br><br> F 28 F <br> F 25 B <br> F 16 L |
| | <u>DE – A – 2 227 955</u> (WIELAND) <br> * Seite 4, Absatz 2; Figuren * <br><br> — | 1 | |
| A | <u>FR – A – 2 166 792</u> (FIOT) <br><br> — | 5 | |

Der vorliegende Recherchenbericht wurde für alle Patentansprüche erstellt.

| Recherchenort | Abschlußdatum der Recherche | Prüfer |
|---|---|---|
| Den Haag | 15-03-1979 | JOHANSSON |

EPA form 1503.1 06.78